# EUROPÄISCHE PATENTSCHRIFT

(11) **EP 3 577 066 B1**
(45) Veröffentlichungstag und Bekanntmachung des Hinweises auf die Patenterteilung: **14.04.2021**
(21) Anmeldenummer: 18701675.3
(22) Anmeldetag: 10.01.2018
(51) Int. Cl.: C01B 3/38, C01B 3/48

(54) **VERFAHREN ZUR BEHANDLUNG EINES SYNTHESEGASSTROMS**
METHOD FOR TREATING A SYNTHESIS GAS STREAM
PROCÉDÉ DE TRAITEMENT D'UN FLUX DE GAZ DE SYNTHÈSE

(30) Priorität: 02.02.2017 DE 102017201681
(43) Veröffentlichungstag der Anmeldung: 11.12.2019
(73) Patentinhaber: thyssenkrupp Industrial Solutions AG, 45143 Essen (DE); thyssenkrupp AG, 45143 Essen (DE)
(72) Erfinder: JOHANNING, Joachim, 46045 Oberhausen (DE); KEIL, Bernd, 44141 Dortmund (DE)
(74) Vertreter: thyssenkrupp Intellectual Property GmbH
(86) Internationale Anmeldenummer: PCT/EP2018/050573
(87) Internationale Veröffentlichungsnummer: WO 2018/141519

(56) Entgegenhaltungen:
- EP-A1- 0 816 290
- WO-A2-2009/156085
- US-A- 4 296 085
- US-A- 4 545 976

## Beschreibung

Die vorliegende Erfindung betrifft ein Verfahren zur Behandlung eines Synthesegasstroms umfassend eine Dampfreformierung zunächst in einem Primärreformer und anschließend in einem Sekundärreformer, wobei das den Sekundärreformer verlassende Rohsynthesegas in einem Dampferzeuger abgekühlt und danach in einem Dampfüberhitzer weiter abgekühlt wird, wobei der Rohsynthesegasstrom nach Verlassen des Sekundärreformers in mindestens zwei Teilgasströme aufgeteilt wird, von denen nur ein erster Teilgasstrom dem Dampferzeuger zugeführt wird, während ein zweiter Teilgasstrom unter Umgehung des Dampferzeugers dem Dampfüberhitzer zugeleitet wird, wobei das Verfahren weiterhin eine Co-Konvertierung des Synthesegasstroms in einem CO-Konvertierungsreaktor umfasst.

Als Synthesegas bezeichnet man ein Gasgemisch aus Kohlenmonoxid und Wasser, welches man unter anderem zur Herstellung von Ammoniak verwendet. Synthesegas kann beispielsweise mittels Dampfreformierung von Erdgas gewonnen werden. Bei der Dampfreformierung reagiert Methan mit Wasserdampf im Primärreformer nach der folgenden Reaktionsgleichung (1):

CH₄ + H₂O → CO + H₂ (1)

Im Primärreformer setzt sich das Methangas nur unvollkommen um. Um die Ausbeute an Wasserstoff zu erhöhen und den Restgehalt an Methan so gering wie möglich zu halten, wird in einem zweiten Schritt im Sekundärreformer das restliche Methangas mit Sauerstoff zu Kohlenstoffmonoxid und Wasserstoff umgesetzt. Der Sekundärreformer wird hierzu mit Luft beschickt, wobei auch der für die spätere Ammoniaksynthese erforderliche Stickstoff in das Gasgemisch kommt.

2 CH₄ + O₂ → 2 CO + 4 H₂ (2)

Anschließend erfolgt die so genannte CO-Shift-Konvertierung, die auch als Wassergas-Shift-Reaktion bezeichnet wird, welche genutzt wird, um den Kohlenstoffmonoxid-Anteil im Synthesegas zu verringern und zusätzlichen Wasserstoff zu erzeugen. Es handelt sich um eine Gleichgewichtsreaktion, die exotherm ist und der nachstehend wiedergegebenen Reaktionsgleichung folgt:

CO + H₂O ⇔ CO₂ + H₂ (3)

Bei der Herstellung von Synthesegas in Ammoniak- und Wasserstoff-Anlagen liegt das Prozessgas nach der Reformierung üblicherweise bei sehr hohen Temperaturen vor. Der optimalen Nutzung der damit sehr hochwertigen Abwärmen steht jedoch insbesondere der Mechanismus des Metal Dusting-Angriffs auf alle metallischen Oberflächen entgegen. Die Ursache hierfür ist der hohe Kohlenmonoxid-Partialdruck in diesen Gasen, ausgelöst durch verfahrensbedingt verhältnismäßig hohe Kohlenmonoxidgehalte in Verbindung mit den hohen Gesamtdrücken in den heute errichteten Anlagen.

Durch die prozessbedingt nach der Reformierung erforderliche Abkühlung des Synthesegases entwickelt sich im Gas zunehmend ein thermodynamisches Ungleichgewicht, da die Umwandlung des Kohlenmonoxids in Kohlendioxid entsprechend der sich verschiebenden Gleichgewichtslage infolge der schnellen Temperaturabnahme nicht stattfinden kann. Durch dieses Ungleichgewicht entwickelt das Prozessgas eine zunehmende Kohlenstoffaktivität, da das Kohlenmonoxid über mehrere Reaktionsmechanismen partiell zu reinem Kohlenstoff reduziert werden kann.

Der Kohlenstoff lagert sich zum Teil auf den Oberflächen der die Strömung führenden Bauteile ab. Auf den metallischen Oberflächen setzt der ausgeschiedene Kohlenstoff in einem Temperaturfenster von etwa 450 - 750 °C den als "Metal Dusting" (MD) bekannten zerstörenden Mechanismus in Gang. Der Kohlenstoff diffundiert in die Oberflächen hinein und bildet hier Karbide mit dem Grundwerkstoff. Ab einem gewissen Sättigungsgrad zerfallen Teile der gebildeten Karbide wieder unter Zerstörung der Gefügestruktur des Werkstoffs. Der entstehende Staub wird durch die Strömung abgetragen und das angegriffene Gefüge erleidet einen ständigen Substanzverlust bis zur völligen Zerstörung.

Das Temperaturfenster, in dem der MD-Angriff kritisch ist, wird durch zwei gegenläufige Mechanismen bestimmt. Mit abnehmender Temperatur wächst das thermodynamische Ungleichgewicht im Gas und damit die Triebkraft für die Kohlenstoffausscheidung kontinuierlich. Gleichzeitig sinken aber mit abnehmender Temperatur die Umsatzgeschwindigkeiten der beteiligten Reaktionen sowie aller Diffusions- und Ausscheidungsprozesse, so dass der MD-Angriff in technischem Maßstab zum Erliegen kommt.

Hochlegierte austenitische Stähle und Nickelbasiswerkstoffe erlauben derzeit die höchsten Arbeitstemperaturen, bisher ist aber kein völlig MD-resistenter Werkstoff bekannt. Damit kann die Prozessabwärme derzeit nur bis zu einem verhältnismäßig niedrigen Temperaturniveau, d.h. thermodynamisch weniger effizient genutzt werden. Üblich ist deshalb in Ammoniak- und Wasserstoff-Anlagen eine weitgehende Nutzung der Wärme zur reinen Dampferzeugung und nur zu einem geringen Anteil zur Dampfüberhitzung, bedingt durch die im Hinblick auf die MD-Gefährdung limitierte Überhitzungstemperatur. Für die weitere Dampfüberhitzung muss deshalb andere im Prozess vorhandene Abwärme eingesetzt werden, in der Regel Abwärme aus dem Rauchgas des Steam Reformers.

Diese Wärme kann damit nicht mehr für andere Zwecke, insbesondere zur intensiveren Vorwärmung der Prozessmedien und Senkung des Feuerungsbedarfs für den Primärreformer eingesetzt werden. Stattdessen erzeugt der Prozess eine entsprechend größere Menge an Dampf. In einer Düngemittelanlage, in der die Ammoniak-Anlage die Edukte für eine nachgeschaltete Harnstoff-Anlage bereitstellt, kann der überschüssige Dampf ohne Nachteile für den spezifischen Energieverbrauch der Gesamtanlage intern genutzt werden. Für eine alleinstehende Ammoniak-Anlage oder eine WasserstoffAnlage ist aber im Allgemeinen ein möglichst geringer Dampfexport vorteilhaft, da meist nicht ohne weiteres ein Abnehmer für den Dampfüberschuss vorhanden ist. Eine möglichst hohe Überhitzungstemperatur für den Dampf im Prozessgasweg zur Reduzierung der insgesamt erzeugten Dampfmenge ist damit insbesondere für diese Anlagen vorteilhaft.

Der spezifische Energieverbrauch von Ammoniak- und Wasserstoff-Anlagen wird zunehmend zu einem wesentlichen Beurteilungskriterium für die Erwerber solcher Anlagen und somit zu einem immer bedeutenderen Element für die Wettbewerbsfähigkeit der Anlagen. Dominierenden Einfluss auf den spezifischen Energieverbrauch der Anlagen hat eine möglichst effiziente Nutzung der prozessintern anfallenden Abwärmen. Dies bedingt eine Übertragung der Wärme vom Prozessgas an Arbeitsmedien, zum Beispiel Dampf auf möglichst hohem Temperaturniveau, um in nachgeschalteten Arbeitsprozessen eine möglichst große Ausbeute an mechanischer Arbeit zu erzielen und entsprechend wenig Abwärme zu erzeugen.

Im Bereich der Reformierung steht einer Wärmeübertragung auf hohem Temperaturniveau der Zerstörungsmechanismus des Metal Dusting entgegen, der durch den großen Partialdruck des im Synthesegas enthaltenen Kohlenmonoxids ausgelöst wird. In den vergangenen Jahren sind von den Werkstofflieferanten verbesserte Werkstoffe entwickelt worden, die die Temperatureinsatzgrenzen moderat zu höheren Temperaturen verschoben haben. Völlig resistente Werkstoffe sind aber bisher nicht bekannt. Hinzu kommt, dass die verbesserten Werkstoffe - bedingt durch die immer höheren Anteile an hochwertigen Legierungselementen - teurer sind und deren Verarbeitung aufwändiger wird.

Die Kohlenstoffaktivität als maßgebender Parameter für das Metal Dusting-Potenzial eines Prozessgases mit signifikantem Kohlenmonoxidanteil wird durch mehrere Parameter bestimmt. Den größten Einfluss haben der Kohlenmonoxidgehalt und der Gesamtdruck, die zusammen den Partialdruck des Kohlenmonoxids bestimmen, sowie die Temperatur. Die Kohlenstoffaktivität ist dem CO-Partialdruck und damit dem Kohlenmonoxidgehalt direkt proportional. Bezüglich der Temperatur besteht eine reziproke Abhängigkeit, das heißt die Kohlenstoffaktivität nimmt mit abnehmender Temperatur zu. Eine Reduzierung des CO-Gehaltes im Prozessgas und ein Betrieb des Dampfüberhitzers bei höherer Temperatur sind damit prinzipiell vorteilhaft für die Verringerung des Metal Dusting-Potenzials.

Grundsätzlich ließe sich eine Verringerung des CO-Gehaltes auch durch eine zusätzliche Konvertierung zwischen dem Dampferzeuger und dem Dampfüberhitzer erreichen, da sich die Gleichgewichtslage der oben wiedergegebenen Wassergas-Shift-Reaktion gemäß Reaktionsgleichung (3) durch die verringerte Temperatur bereits signifikant zur Seite des Kohlendioxids verlagert hat. Die Betriebserfahrungen mit den bisher verfügbaren Katalysatoren für die CO-Konvertierung lassen aber den Schluss zu, dass ein mechanisch und thermisch entsprechend beständiger Katalysator mit der erforderlichen Selektivität auf absehbare Zeit nicht zur Verfügung stehen wird.

In der EP 0 816 290 B1 wird ein Verfahren zur Behandlung eines Synthesegasstroms beschrieben, umfassend eine Dampfreformierung in einem Primärreformer und anschließend in einem Sekundärreformer, wobei weiterhin nach dem Sekundärreformer eine CO-Konvertierungsstufe vorgesehen ist. Hauptziel des Verfahrens ist es, eine möglichst wirtschaftliche Herstellung von reinem CO-Gas - ausgehend von kohlenwasserstoffhaltigen Einsatzstoffen, insbesondere Erdgas zu ermöglichen und eine möglichst große Menge des zweiten, vorwiegend Wasserstoff enthaltenden Koppelproduktstroms zu erzeugen.

Bei diesem bekannten Verfahren wird vorgeschlagen, zwischen Sekundärreformer und der darauf folgenden CO-Konvertierungsstufe einen Teilgasstrom aus dem Synthesegasstrom abzuzweigen, diesen Teilgasstrom auf eine Temperatur unter 100 °C abzukühlen, dabei den im Gasstrom enthaltenen Wasserdampf auszukondensieren, das verbleibende Rohrsynthesegas anschließend in einer mehrstufigen Gastrennanlage in die Gaskomponenten H₂, Rest-H₂O, CH₄, CO₂ und N₂ aufzutrennen und einzeln oder gemeinsam von CO abzutrennen, diese vom CO abgetrennten Gaskomponenten auf einen höheren Druck zu komprimieren, der oberhalb des Drucks in der CO-Konvertierungsstufe liegt, zu einem Mischgasstrom wieder zu vereinigen und diesen Mischgasstrom nach Aufheizung auf eine Temperatur von 200 °C bis 500 °C der CO-Konvertierungsstufe des Dampfreformers wieder zuzuführen, wobei die verbleibende reine CO-Fraktion separat entnommen und gegebenenfalls einer Weiterverarbeitung zugeführt wird.

Bei dem aus der EP 0 816 290 B1 bekannten Verfahren wird der gesamte den Sekundärreformer verlassende Produktstrom zunächst in herkömmlicher Weise einem Wärmetauscher zugeführt, in dem Dampf erzeugt wird. In diesem Apparat arbeiten die metallischen Komponenten - bedingt durch den intensiven Wärmeübergang auf der Wasserseite im Bereich der Verdampfung und die relativ niedrige Verdampfungstemperatur auf einem Temperaturniveau unterhalb des hinsichtlich Metal Dusting kritischen Temperaturintervalls. Erst im Strömungsweg hinter diesem Dampferzeuger erfolgt eine Aufteilung in zwei Teilgasströme, von denen der eine in einem Gegenstromwärmetauscher abgekühlt und dann einer mehrstufigen CO-Abtrennungsanlage zugeführt wird. Der aus dem ersten Teilgasstrom gewonnene wieder aufgeheizte Mischgasstrom wird bei diesem bekannten Verfahren wieder mit dem Hauptsynthesegasstrom vereinigt, bevor er mit diesem gemeinsam der CO-Konvertierungsstufe zugeführt wird. Die für die herkömmliche Prozessführung charakteristische, fehlende Nutzung der im Prozessgas nach dem Sekundärreformer enthaltenen Wärme zur Dampfüberhitzung wird durch das Verfahren nach der EP 0 816 290 B1 nicht geändert.

Aus der US-Patentschrift 4,545,976 A ist ein Verfahren zur Behandlung eines Synthesegasstroms mit den eingangs genannten Merkmalen bekannt, bei dem eine Bypass-Leitung vorgesehen ist, so dass ein Teilgasstrom des Synthesegases den Dampferzeuger umgeht und danach wieder mit dem übrigen Teilgasstrom, der durch den Dampferzeuger geleitet wird, vereint und mit diesem gemeinsam einem Dampfüberhitzer zugeführt wird. Stromabwärts des Dampfüberhitzers ist bei diesem bekannten Verfahren eine CO-Konvertierung des vereinten Synthesegasstroms vorgesehen, um Kohlenmonoxid katalytisch in Kohlendioxid und weiteren Wasserstoff umzuwandeln.Nachteilig bei diesem bekannten Verfahren ist, dass die Eintrittstemperatur in den Dampfüberhitzer umso höher wird, je größer der Anteil des Gases ist, welcher über die Bypass-Leitung geleitet wird. Für die Lebensdauer des Dampfüberhitzers ist dies ungünstig. Nur bei Temperaturen unter 450 °C tritt kein Metall Dusting mehr auf, da dann die Diffusionsgeschwindigkeit des Kohlenstoffs in das Stahlgefüge des Apparates vernachlässigbar klein wird. Da die Eintrittstemperatur in den Dampfüberhitzer hier über 450 °C liegt, wird dieser in den Temperaturbereich des Metall Dusting gefahren. Der Bypass kann also nicht dazu dienen, den Dampfüberhitzer vor Metall Dusting zu schützen, sondern dient lediglich dazu, die Eintrittstemperatur in den ersten Hochtemperatur-Shift-Konverter einzustellen.

Die Aufgabe der vorliegenden Erfindung besteht dagegen darin, ein Verfahren mit den eingangs genannten Merkmalen im Hinblick auf die Möglichkeiten der internen Wärmenutzung zu verbessern.

Die Lösung dieser Aufgabe liefert ein Verfahren der eingangs genannten Art mit den Merkmalen des Anspruchs 1.

Erfindungsgemäß ist vorgesehen, dass nur der erste Teilgasstrom nach Durchströmen des Dampferzeugers einer CO-Konvertierungsreaktion in einem ersten CO-Konvertierungsreaktor unterzogen wird, bevor dieser erste Teilgasstrom dem Dampfüberhitzer zugeleitet wird.

Kern des Erfindungsgedankens ist somit der teilweise vorgezogene CO-Konvertierungs-Shift für einen Teilstrom des Synthesegases.

Es ist im Rahmen der vorliegenden Erfindung vorteilhaft den Teilstrom, der den Dampferzeuger umgeht, möglichst groß zu machen, um im Dampfüberhitzer eine möglichst hohe Eintrittstemperatur des heißen Spaltgases zu ermöglichen und den Dampf weit überhitzen zu können. Das dadurch sonst bewirkte erhöhte Metal Dusting wird aber vermieden, indem der übrige Teilstrom, der durch den Dampferzeuger geleitet wird, nach dem Durchströmen des Dampferzeugers einer Teilkonvertierung unterzogen wird und man so den Partialdruck des schädlichen CO verringert.

Gemäß der Erfindung wird der erste Teilgasstrom nach Durchströmen des Dampferzeugers einer CO-Konvertierungsreaktion gemäß der oben wiedergegebenen Reaktionsgleichung (3) in einem Konvertierungsreaktor unterzogen.

Weiterhin wird vorzugsweise der erste Teilgasstrom nach dem Austritt aus dem Konvertierungsreaktor wieder mit dem zweiten Teilgasstrom vereint.

Bevorzugt wird dann ein aus dem ersten Teilgasstrom und dem mit diesem vereinten zweiten Teilgasstrom gebildeter teilkonvertierter Rohsynthesegasstrom dem Dampfüberhitzer zugeleitet.

Der erste Teilstrom wird somit bei dieser Ausbildung des Verfahrens in konventioneller Weise zur Dampferzeugung herangezogen und auf eine Temperatur abgekühlt, die eine Konvertierung eines großen Teils des Kohlenmonoxids zu Kohlendioxid ermöglicht. Anschließend wird der konvertierte erste Teilstrom wieder mit dem zweiten Teilstrom vereinigt. Der entstehende Gesamtstrom hat damit zwangsläufig einen signifikant geringeren Kohlenmonoxidgehalt als der entsprechende Prozessgasstrom einer Anlage mit herkömmlicher Wärmenutzung und entsprechend geringere Kohlenstoffaktivität. Er wird dann wie in einer Anlage mit herkömmlicher Prozessführung dem Dampfüberhitzer zugeleitet, hat aber ein signifikant reduziertes Metal Dusting -Potenzial.

Vorzugsweise wird gemäß einer Weiterbildung der Erfindung ein aus dem Dampfüberhitzer austretender gekühlter Rohsynthesegasstrom anschließend einem weiteren CO-Konvertierungsreaktor zugeführt, so dass damit ein voll konvertiertes Rohsynthesegas erhalten wird.

Der in dem Dampferzeuger erzeugte Sattdampf wird vorzugsweise anschließend dem Dampfüberhitzer zugeführt. Da für die Dampferzeugung nur ein Teil der Synthesegasmenge herangezogen wird, ist die Dampfmenge beim erfindungsgemäßen Verfahren spezifisch deutlich kleiner als bei der herkömmlichen Prozessführung.

Der überhitzte Dampf aus dem Dampfüberhitzer kann - wegen der gegenüber der herkömmlichen Prozessführung reduzierten Menge - in der Regel anlagenintern genutzt werden und braucht nicht exportiert zu werden.

Aus dem weiteren CO-Konvertierungsreaktor wird bei der zuvor beschriebenen bevorzugten Variante des erfindungsgemäßen Verfahrens ein voll konvertierter Rohsynthesegasstrom abgeführt.

Als Ergebnis von Versuchen im Zusammenhang mit der vorliegenden Erfindung hat es sich als vorteilhaft herausgestellt, wenn der Gesamtgasstrom in zwei Teilgasströme m₁ und m₂ aufgeteilt wird, und der erste Teilstrom m₁ zum Gesamtstrom m₁ + m₂ in einem Verhältnis m₁ : (m1 +m₂) von 0,9 oder kleiner, vorzugsweise von 0,8 oder kleiner, besonders bevorzugt von 0,7 oder kleiner steht.

Weiterhin ist es vorteilhaft, wenn das Aufteilungsverhältnis der beiden Teilströme so gewählt wird, dass die Mischtemperatur der wieder vereinten Teilströme wenigstens etwa 440 °C, bevorzugt wenigstens etwa 490 °C, besonders bevorzugt wenigstens etwa 550 °C beträgt. Die Abhängigkeit der Parameter Kohlenstoffaktivität und Mischgastemperatur von der Auswahl des jeweiligen Teilungsverhältnisses der beiden Teilströme wird aus den in der unten stehenden Tabelle 1 wiedergegebenen Werten deutlich und wird in diesem Zusammenhang noch näher erläutert.

Gegenstand der vorliegenden Erfindung ist weiterhin eine Anlage, insbesondere zur Durchführung des vorgenannten Verfahrens, wobei diese Anlage umfasst:
mindestens einen Primärreformer,
mindestens einen diesem im Strömungsweg nachgeschalteten Sekundärreformer,
mindestens einen dem Sekundärreformer im Strömungsweg nachgeschalteten Dampferzeuger sowie
mindestens einen dem Dampferzeuger im Strömungsweg nachgeschalteten Dampfüberhitzer, wobei mindestens eine im Strömungsweg nach dem Sekundärreformer abzweigende Zweigleitung für einen zweiten Teilgasstrom des Rohsynthesegasstroms vorgesehen ist, welche unter Umgehung des Dampferzeugers in einem Bereich stromabwärts des Dampferzeugers und stromaufwärts des Dampfüberhitzers in die Leitung einmündet, in der ein erster Teilgasstrom des Rohsynthesegasstroms strömt, welcher den Dampferzeuger durchströmt hat, wobei erfindungsgemäß mindestens ein CO-Konvertierungsreaktor im Strömungsweg zwischen dem Dampferzeuger und dem Dampfüberhitzer angeordnet ist, welcher nur von dem ersten Teilgasstrom des Rohsynthesegasstroms durchströmt wird.

Weiterhin umfasst die erfindungsgemäße Anlage mindestens einen weiteren CO-Konvertierungsreaktor, welcher stromabwärts des Dampfüberhitzers angeordnet ist und von einem vereinten Rohsynthesegasstrom umfassend sowohl den ersten Teilgasstrom als auch den zweiten Teilgasstrom durchströmt wird.

Das Aufteilungsverhältnis der beiden Teilströme wird bevorzugt so gewählt, dass die Mischtemperatur die durch die geringere Kohlenstoffaktivität mögliche Anhebung der Dampfüberhitzungstemperatur zulässt. Durch die Reduzierung der insgesamt erzeugten Dampfmenge und die höhere Überhitzungstemperatur im Prozessgasweg wird aus dem Rauchgas des Reformers eine geringere Wärmemenge benötigt als bei konventioneller Abwärmenutzung. Die frei werdende Wärme kann somit zur intensiveren Vorwärmung der Prozessmedien eingesetzt werden und den Feuerungsbedarf des Reformers verringern. Des Weiteren reduziert sich die Exportdampfmenge der Anlage.

Die nachfolgende Tabelle 1 zeigt beispielhaft die Abhängigkeit der Kohlenstoffaktivität und der Gastemperatur des Gesamtstromes nach der Vermischung in Abhängigkeit des Mengenverhältnisses der beiden Teilströme. Die Tabelle veranschaulicht, dass bei vergleichbaren Kohlenstoffaktivitäten wie in einer Anlage mit konventioneller Prozessführung deutlich höhere Gastemperaturen und damit höhere Dampfüberhitzungstemperaturen realisiert werden können. Das Verhältnis m1/(m1 + m2) = 1,0 kennzeichnet dabei die herkömmliche Prozessführung ohne Stromaufteilung.

**Tabelle 1: Kohlenstoffaktivität und Mischgastemperatur als Funktion des Teilungsverhältnisses**

| Parameter | Einheit | | | | |
|---|---|---|---|---|---|
| m₁/(m₁ + m₂) | -- | 1,00 | 0,90 | 0,80 | 0,70 |
| C-Aktivität | -- | 353 | 76 | 20 | 6 |
| Mischtemperatur | °C | 443 | 502 | 560 | 618 |

Die in Tabelle 1 dargelegten C-Aktivitäten sind deutlich kleiner als die C-Aktivitäten des Gesamtstroms nach der Vereinigung der Teilströme 14 und 15 in dem in EP 0 816 290 B1 vorgeschlagenen Verfahren. Das in dieser Schrift vorgeschlagene Verfahren enthält damit keinen Ansatz zur Senkung des Metal Dusting-Potenzials des Prozessgasstroms und führt den Fachmann damit von dem Lösungsansatz der hier vorliegenden Erfindung weg.

Den in Tabelle 1 beispielhaft aufgeführten Werten liegt die in Tabelle 2 angegebene Gaszusammensetzung nach Sekundärreformer zu Grunde.

**Tabelle 2: Zusammensetzung des Prozessgases nach Sekundärreformer**

| Komponente | Anteil in mol% |
|---|---|
| CH₄ | 0,24 |
| CO₂ | 4,58 |
| CO | 9,10 |
| Ar | 0,19 |
| H₂ | 37,06 |
| N₂ | 15,60 |
| H₂O | 33,23 |

Die Temperatur am Austritt des Sekundärreformers beträgt 1012 °C und der Druck 34 bara. Im Dampferzeuger wird der Hauptstrom m₁ auf 370 °C abgekühlt und erleidet einen Druckverlust von 0,3 bar. Durch die Exothermie der anschließenden CO-Konvertierung steigt die Temperatur des Hauptstroms m₁ wieder auf 443 °C. Der Druck sinkt in Folge des Druckverlustes im Reaktor auf 33,2 bara. Die Zusammensetzung des konvertierten Hauptstroms m₁ zeigt Tabelle 3.

**Tabelle 3: Zusammensetzung des konvertierten Hauptstroms m₁**

| Komponente | Anteil in mol% |
|---|---|
| CH₄ | 0,24 |
| CO₂ | 11,20 |
| CO | 2,48 |
| Ar | 0,19 |
| H₂ | 43,68 |
| N₂ | 15,60 |
| H₂O | 26,61 |

Der nach dem Sekundärreformer abgetrennte Teilstrom m₂ wird ohne Abkühlung und Änderung der Zusammensetzung dem Hauptstrom m₁ nach der Konvertierung wieder zugeführt. Die sich hierdurch ergebenden Zusammensetzungen können durch eine dem Fachmann geläufige Mischungsrechnung leicht ermittelt werden, so dass auf eine Darstellung an dieser Stelle verzichtet werden kann.

Aus der Tabelle 1 ergibt sich, dass, je weiter das Teilungsverhältnis sinkt, das heißt je kleiner der erste Teilgasstrom m₁, der dem Dampferzeuger zugeführt wird, im Verhältnis zu dem zweiten Teilgasstrom m₂ ist, der den Dampferzeuger umgeht, einerseits die Kohlenstoffaktivität merklich absinkt, während gleichzeitig die Mischtemperatur der vereinten Teilströme nicht unwesentlich zunimmt.

Die in den Unteransprüchen genannten Merkmale betreffen bevorzugte Weiterbildungen der vorliegenden Erfindung. Weitere Vorteile ergeben sich aus der nachfolgenden Detailbeschreibung.

Nachfolgend wird die vorliegende Erfindung anhand eines Ausführungsbeispiels unter Bezugnahme auf die beiliegenden Zeichnungen näher erläutert. Dabei zeigen:

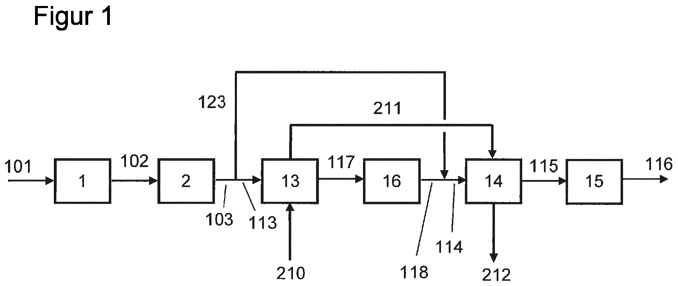

Figur 1 ein schematisches Fließbild einer ersten beispielhaften Anlage zur Behandlung eines Synthesegasstroms ;
Nachfolgend wird zunächst auf die Figur 1 Bezug genommen und anhand dieser wird beispielhaft eine erfindungsgemäße Anlage zur Behandlung eines Synthesegasstroms näher erläutert.

Diese Anlage umfasst einen Dampfreformer 1, in den beispielsweise ein entschwefeltes Erdgas als Prozessgas über die Leitung 101 eingeleitet wird. In dem Dampfreformer 1 erfolgt die Dampfreformierung gemäß der oben wiedergegebenen Reaktionsgleichung (1). Das im Dampfreformer 1 teilreformierte Proessgas verlässt diesen über die Leitung 102 und wird einem Sekundärreformer 2 zugeführt, in dem das Prozessgas weiter reformiert wird entsprechend der oben wiedergegebenen Reaktionsgleichung (2). Das Rohsynthesegas 103 nach dem Sekundärreformer 2 wird nun in zwei Teilströme aufgeteilt, nämlich einen ersten Teilstrom 113 (vorstehend als m₁ bezeichnet), welcher einem Dampferzeuger 13 zugeführt wird und einen zweiten Teilstrom 123 (vorstehend als m₂ bezeichnet), welcher abgezweigt wird und über eine Zweigleitung unter Umgehung des Dampferzeugers 13 später wieder mit dem ersten Teilstrom vereint wird.

Der erste Teilstrom 113 durchströmt den Dampferzeuger 13, dem über eine Leitung 210 Kesselspeisewasser zugeführt wird. Der im Dampferzeuger 13 erzeugte Sattdampf wird über die Leitung 211 einem Dampfüberhitzer 14 zugeführt. Der Teilstrom des Rohsynthesegases, welcher den Dampferzeuger 13 durchströmt hat, gelangt über die Leitung 117 in einen ersten CO-Konvertierungsreaktor 16, den dieser über die Leitung 118 wieder verlässt, um stromabwärts von dem Konvertierungsreaktor 16 wieder mit dem zweiten Teilstrom 123, der den Dampferzeuger 13 umgangen hat, vereint zu werden. Aus den beiden Teilströmen entsteht somit wieder ein Gesamtstrom eines teilkonvertierten Rohsynthesegases, welches über die Leitung 114 dann dem Dampfüberhitzer 14 zugeführt wird. Dort wird der über die Leitung 211 zugeführte Sattdampf zu einem überhitzten Dampf erhitzt, welcher dann über die Leitung 212 abgeführt wird, wohingegen der im Dampfüberhitzer 14 weiter abgekühlte Rohsynthesegasstrom über die Leitung 115 einem weiteren CO-Konvertierungsreaktor zugeführt wird. In diesem erfolgt die weitere CO-Konvertierung und das voll konvertierte Rohsynthesegas wird dann aus diesem über die Leitung 116 abgeführt.

Bei diesem Konzept wird das Prozessgas somit nach dem Sekundärreformer 2 in einen ersten 113 und einen zweiten Teilstrom 123 aufgetrennt. Der erste Teilstrom 113 wird in dem Dampferzeuger 13 auf die Eintrittstemperatur einer herkömmlichen CO-Konvertierung 16 abgekühlt, anschließend (teil)-konvertiert und danach wieder mit dem unbehandelten zweiten Teilstrom 123 vereinigt. Der gemeinsame Prozessgasstrom hat sowohl einen signifikant geringeren Kohlenmonoxidgehalt im Vergleich mit dem Prozessgasstrom in einer Anlage mit herkömmlicher Prozessführung als auch - bei entsprechender Wahl des Aufteilungsverhältnisses - eine höhere Temperatur.

Die Kombination der beiden Effekte sorgt für die oben erwähnte deutlich kleinere Kohlenstoffaktivität im Vergleich mit dem Prozessgas bei konventioneller Prozessführung. Die verringerte Kohlenstoffaktivität kompensiert die für das Fortschreiten eines Metal Dusting-Angriffs förderliche Beschleunigung der Reaktionen und Transportprozesse durch die höhere Temperatur. Ein vorteilhafter Nebeneffekt der erfindungsgemäßen Prozessführung besteht darin, dass die in der CO-Konvertierung durch den exothermen Charakter der Reaktion entstehende Wärme durch die Mischung mit dem wärmeren zweiten Teilstrom 123 in gewisser Weise auf ein höheres Temperaturniveau gehoben und entsprechend aufgewertet wird.

### Bezugszeichenliste

- 1: Steam Reformer
- 2: Sekundärreformer
- 3: Dampferzeuger
- 4: Dampfüberhitzer
- 5: CO-Konvertierungsreaktor
- 13: Dampferzeuger im Teilstrom 1
- 14: Dampfüberhitzer
- 15: zweiter CO-Konvertierungsreaktor
- 16: erster CO-Konvertierungsreaktor
- 101: Entschwefeltes Erdgas
- 102: Vorreformiertes Prozessgas nach Primärreformer
- 103: Rohsynthesegas nach Sekundärreformer
- 104: Gekühltes Rohsynthesegas nach Dampferzeuger
- 105: Gekühltes Rohsynthesegas nach Dampfüberhitzer
- 106: Voll konvertiertes Rohsynthesegas
- 113: Teilstrom 1 des Rohsynthesegases nach Sekundärreformer
- 114: Teilkonvertiertes Rohsynthesegas
- 115: Gekühltes Rohsynthesegas nach Dampfüberhitzer
- 116: Voll konvertiertes Rohsynthesegas
- 117: Teilstrom 1 des Rohsynthesegas nach Dampferzeuger
- 118: Teilstrom 1 des Rohsynthesegas nach CO-Konvertierung
- 200: Kesselspeisewasser
- 201: Sattdampf
- 202: überhitzter Dampf
- 210: Kesselspeisewasser
- 211: Sattdampf
- 212: überhitzter Dampf

## Patentansprüche

1. Verfahren zur Behandlung eines Synthesegasstroms umfassend eine Dampfreformierung zunächst in einem Primärreformer (1) und anschließend in einem Sekundärreformer (2), wobei das den Sekundärreformer (2) verlassende Rohsynthesegas (103) in einem Dampferzeuger (13) abgekühlt und danach in einem Dampfüberhitzer (14) weiter abgekühlt wird, wobei der Rohsynthesegasstrom (103) nach Verlassen des Sekundärreformers (2) in mindestens zwei Teilgasströme (113, 123) aufgeteilt wird, von denen nur ein erster Teilgasstrom (113) dem Dampferzeuger (13) zugeführt wird, während ein zweiter Teilgasstrom (123) unter Umgehung des Dampferzeugers (13) dem Dampfüberhitzer (14) zugeleitet wird, wobei das Verfahren weiterhin eine Co-Konvertierung des Synthesegasstroms in einem CO-Konvertierungsreaktor (16) umfasst, **dadurch gekennzeichnet, dass** nur der erste Teilgasstrom nach Durchströmen des Dampferzeugers (13) einer CO-Konvertierungsreaktion in einem ersten CO-Konvertierungsreaktor (16) unterzogen wird, bevor dieser erste Teilgasstrom dem Dampfüberhitzer (14) zugeleitet wird.

2. Verfahren nach Anspruch 1, **dadurch gekennzeichnet, dass** der erste Teilgasstrom (118) nach dem Austritt aus dem ersten CO-Konvertierungsreaktor (16) wieder mit dem zweiten Teilgasstrom (123) vereint wird.

3. Verfahren nach Anspruch 2, **dadurch gekennzeichnet, dass** ein aus dem ersten Teilgasstrom (118) und dem mit diesem vereinten zweiten Teilgasstrom (123) gebildeter teilkonvertierter Rohsynthesegasstrom (114) dem Dampfüberhitzer (14) zugeleitet wird.

4. Verfahren nach einem der Ansprüche 1 bis 3, **dadurch gekennzeichnet, dass** ein aus dem Dampfüberhitzer (14) austretender gekühlter Rohsynthesegasstrom (115) anschließend einem weiteren CO-Konvertierungsreaktor (15) zugeführt wird.

5. Verfahren nach einem der Ansprüche 1 bis 4, **dadurch gekennzeichnet, dass** in dem Dampferzeuger (13) erzeugter Sattdampf dem Dampfüberhitzer (14) zugeführt wird.

6. Verfahren nach einem der Ansprüche 1 bis 5, **dadurch gekennzeichnet, dass** aus dem Dampfüberhitzer (14) überhitzter Dampf (212) abgeführt wird.

7. Verfahren nach einem der Ansprüche 4 bis 6, **dadurch gekennzeichnet, dass** aus dem weiteren CO-Konvertierungsreaktor (15) ein voll konvertierter Rohsynthesegasstrom (116) abgeführt wird.

8. Verfahren nach einem der Ansprüche 1 bis 7, **dadurch gekennzeichnet, dass** der Gesamtgasstrom in zwei Teilgasströme m₁ und m₂ aufgeteilt wird, und der erste Teilstrom m₁ zum Gesamtstrom m₁ + m₂ in einem Verhältnis m₁ : (m1 +m₂) von 0,9 oder kleiner, vorzugsweise von 0,8 oder kleiner, besonders bevorzugt von 0,7 oder kleiner steht.

9. Verfahren nach einem der Ansprüche 1 bis 8, **dadurch gekennzeichnet, dass** das Aufteilungsverhältnis der beiden Teilströme (113, 123) so gewählt wird, dass die Mischtemperatur der wieder vereinten Teilströme wenigstens etwa 440 °C, bevorzugt wenigstens etwa 490 °C, besonders bevorzugt wenigstens etwa 550 °C beträgt.

10. Anlage zur Behandlung eines Synthesegasstroms, insbesondere in einem Verfahren nach einem der Ansprüche 1 bis 9, wobei diese umfasst:
mindestens einen Primärreformer (1),
mindestens einen diesem im Strömungsweg nachgeschalteten Sekundärreformer (2),
mindestens einen dem Sekundärreformer (2) im Strömungsweg nachgeschalteten Dampferzeuger (13) sowie
mindestens einen dem Dampferzeuger (13) im Strömungsweg nachgeschalteten Dampfüberhitzer (14), wobei mindestens eine im Strömungsweg nach dem Sekundärreformer (2) abzweigende Zweigleitung für einen zweiten Teilgasstrom (123) des Rohsynthesegasstroms vorgesehen ist, welche unter Umgehung des Dampferzeugers (13) in einem Bereich stromabwärts des Dampferzeugers (13) und stromaufwärts des Dampfüberhitzers (14) in die Leitung einmündet, in der ein erster Teilgasstrom (113, 118) des Rohsynthesegasstroms strömt, welcher den Dampferzeuger durchströmt hat,
**dadurch gekennzeichnet, dass** mindestens ein CO-Konvertierungsreaktor (16) im Strömungsweg zwischen dem Dampferzeuger (13) und dem Dampfüberhitzer (14) angeordnet ist, welcher nur von dem ersten Teilgasstrom (113, 117) des Rohsynthesegasstroms durchströmt wird.

11. Anlage nach Anspruch 10, **dadurch gekennzeichnet, dass** diese mindestens einen weiteren CO-Konvertierungsreaktor (15) umfasst, welcher stromabwärts des Dampfüberhitzers (14) angeordnet ist und von einem vereinten Rohsynthesegasstrom (114) umfassend sowohl den ersten Teilgasstrom (113) als auch den zweiten Teilgasstrom (123) durchströmt wird.

## Claims

1. A process for treating a synthesis gas stream comprising steam reforming firstly in a primary reformer (1) and subsequently in a secondary reformer (2), wherein the crude synthesis gas (103) exiting the secondary reformer (2) is cooled in a steam generator (13) and is then further cooled in a steam superheater (14), wherein the crude synthesis gas stream (103) after exiting the secondary reformer (2) is split into at least two gas substreams (113, 123), of which only a first gas substream (113) is fed to the steam generator (13), while a second gas substream (123) is supplied to the steam superheater (14) bypassing the steam generator (13), wherein the process further comprises a CO conversion of the synthesis gas stream in a CO conversion reactor (16), **characterized in that** only the first gas substream, after flowing through the steam generator (13), is subjected to a CO conversion reaction in a first CO conversion reactor (16), before this first gas substream is supplied to the steam superheater (14).

2. The process as claimed in claim 1, **characterized in that** the first gas substream (118), after exiting the first CO conversion reactor (16), is recombined with the second gas substream (123).

3. The process as claimed in claim 2, **characterized in that** a partially converted crude synthesis gas stream (114), formed from the first gas substream (118) and the second gas substream (123) combined with this, is supplied to the steam superheater (14).

4. The process as claimed in any of claims 1 to 3, **characterized in that** a cooled crude synthesis gas stream (115) exiting from the steam superheater (14) is subsequently fed to a further CO conversion reactor (15).

5. The process as claimed in any of claims 1 to 4, **characterized in that** saturated steam generated in the steam generator (13) is fed to the steam superheater (14).

6. The process as claimed in any of claims 1 to 5, **characterized in that** superheated steam (212) is discharged from the steam superheater (14).

7. The process as claimed in any of claims 4 to 6, **characterized in that** a fully converted crude synthesis gas stream (116) is discharged from the further CO conversion reactor (15).

8. The process as claimed in any of claims 1 to 7, **characterized in that** the total gas stream is split into two gas substreams m₁ and m₂, and the first substream m₁ to the total stream m₁ + m₂ is in a ratio m₁ : (m1 +m₂) of 0.9 or less, preferably 0.8 or less, particularly preferably 0.7 or less.

9. The process as claimed in any of claims 1 to 8, **characterized in that** the splitting ratio of the two substreams (113, 123) is selected such that the mixing temperature of the recombined substreams is at least approximately 440°C, preferably at least approximately 490°C, particularly preferably at least approximately 550°C.

10. A plant for treating a synthesis gas stream, especially in a process as claimed in any of claims 1 to 9, wherein this comprises:
at least one primary reformer (1),
at least one secondary reformer (2) downstream of said primary reformer in the direction of flow,
at least one steam generator (13) downstream of the secondary reformer (2) in the direction of flow and at least one steam superheater (14) downstream of the steam generator (13) in the direction of flow,
wherein at least one branch line branching off downstream of the secondary reformer (2) in the direction of flow is provided for a second gas substream (123) of the crude synthesis gas stream, which is diverted into the line in a region downstream of the steam generator (13) and upstream of the steam superheater (14), bypassing the steam generator (13), in which a first gas substream (113, 118) of the crude synthesis gas stream is flowing, which has flowed through the steam generator,
**characterized in that** at least one CO conversion reactor (16) is arranged in the direction of flow between the steam generator (13) and the steam superheater (14), through which flows only the first gas substream (113, 117) of the crude synthesis gas stream.

11. The plant as claimed in claim 10, **characterized in that** said plant comprises at least one further CO conversion reactor (15), which is arranged downstream of the steam superheater (14), and through which flows a combined crude synthesis gas stream (114) comprising both the first gas substream (113) and the second gas substream (123).

## Revendications

1. Procédé pour le traitement d'un courant de gaz de synthèse comprenant un reformage à la vapeur tout d'abord dans un reformeur primaire (1) et ensuite dans un reformeur secondaire (2), le gaz de synthèse brut (103) quittant le reformeur secondaire (2) étant refroidi dans un générateur de vapeur (13) et ensuite davantage refroidi dans un surchauffeur de vapeur (14), le courant de gaz de synthèse brut (103) étant divisé après avoir quitté le reformeur secondaire (2) en au moins deux courants de gaz partiels (113, 123), parmi lesquels uniquement un premier courant de gaz partiel (113) est amené dans le générateur de vapeur (13), tandis qu'un deuxième courant de gaz partiel (123) est acheminé dans le surchauffeur de vapeur (14) en contournant le générateur de vapeur (13), le procédé comprenant en outre une conversion de CO du courant de gaz de synthèse dans un réacteur de conversion de CO (16), **caractérisé en ce qu'uniquement** le premier courant de gaz partiel est soumis, après la traversée du générateur de vapeur (13), à une réaction de conversion de CO dans un premier réacteur de conversion de CO (16), avant que ce premier courant de gaz partiel soit acheminé dans le surchauffeur de vapeur (14).

2. Procédé selon la revendication 1, **caractérisé en ce que** le premier courant de gaz partiel (118) est de nouveau réuni avec le deuxième courant de gaz partiel (123) après la sortie du premier réacteur de conversion de CO (16).

3. Procédé selon la revendication 2, **caractérisé en ce qu'**un courant de gaz de synthèse brut partiellement converti (114) formé à partir du premier courant de gaz partiel (118) et du deuxième courant de gaz partiel (123) réuni avec celui-ci est acheminé dans le surchauffeur de vapeur (14).

4. Procédé selon l'une quelconque des revendications 1 à 3, **caractérisé en ce qu'**un courant de gaz de synthèse brut refroidi (115) sortant du surchauffeur de vapeur (14) est ensuite amené dans un réacteur de conversion de CO supplémentaire (15).

5. Procédé selon l'une quelconque des revendications 1 à 4, **caractérisé en ce que** de la vapeur saturée générée dans le générateur de vapeur (13) est amenée dans le surchauffeur de vapeur (14).

6. Procédé selon l'une quelconque des revendications 1 à 5, **caractérisé en ce que** de la vapeur surchauffée (212) est déchargée du surchauffeur de vapeur (14).

7. Procédé selon l'une quelconque des revendications 4 à 6, **caractérisé en ce qu'**un courant de gaz de synthèse brut entièrement converti (116) est déchargé du réacteur de conversion de CO supplémentaire (15).

8. Procédé selon l'une quelconque des revendications 1 à 7, **caractérisé en ce que** le courant de gaz total est divisé en deux courants de gaz partiels m₁ et m2, et le premier courant partiel m₁ et le courant total m₁+m₂ sont en un rapport m₁: (m₁+m₂) de 0,9 ou moins, de préférence de 0,8 ou moins, de manière particulièrement préférée de 0,7 ou moins.

9. Procédé selon l'une quelconque des revendications 1 à 8, **caractérisé en ce que** le rapport de division des deux courants partiels (113, 123) est choisi de telle sorte que la température de mélange des courants partiels de nouveau réunis soit d'au moins environ 440 °C, de préférence d'au moins environ 490 °C, de manière particulièrement préférée d'au moins environ 550 °C.

10. Unité pour le traitement d'un courant de gaz de synthèse, notamment dans un procédé selon l'une quelconque des revendications 1 à 9, celle-ci comprenant :
au moins un reformeur primaire (1),
au moins un reformeur secondaire (2) raccordé à la suite de celui-ci dans la trajectoire d'écoulement,
au moins un générateur de vapeur (13) raccordé à la suite du reformeur secondaire (2) dans la trajectoire d'écoulement, ainsi que
au moins un surchauffeur de vapeur (14) raccordé à la suite du générateur de vapeur (13) dans la trajectoire d'écoulement,
au moins une conduite de bifurcation bifurquant après le reformeur secondaire (2) dans la trajectoire d'écoulement étant prévue pour un deuxième courant de gaz partiel (123) du courant de gaz de synthèse brut, qui débouche en contournant le générateur de vapeur (13) dans une zone en aval du générateur de vapeur (13) et en amont du surchauffeur de vapeur (14) dans la conduite, dans laquelle un premier courant de gaz partiel (113, 118) du courant de gaz de synthèse brut s'écoule, qui a traversé le générateur de vapeur,
**caractérisée en ce qu'**au moins un réacteur de conversion de CO (16) est agencé dans la trajectoire d'écoulement entre le générateur de vapeur (13) et le surchauffeur de vapeur (14), qui est traversé uniquement par le premier courant de gaz partiel (113, 117) du courant de gaz de synthèse brut.

11. Unité selon la revendication 10, **caractérisée en ce que** celle-ci comprend au moins un réacteur de conversion de CO supplémentaire (15), qui est agencé en aval du surchauffeur de vapeur (14) et est traversé par un courant de gaz de synthèse brut réuni (114) comprenant aussi bien le premier courant de gaz partiel (113) que le deuxième courant de gaz partiel (123).
